# EUROPEAN PATENT APPLICATION

(11) **EP 0 659 661 A1**
(43) Date of publication of application: **28.06.1995**
(21) Application number: 94203429.9
(22) Date of filing: 24.11.1994
(51) Int. Cl.: B65G 19/14, B65G 19/24

(54) **Cable with conveyance elements for materials inside a conveyor duct**

(30) Priority: 26.11.1993 IT MI932503
(71) Applicant: Pirovano, Camillo, I-22052 Cernusco Lombardone (Como) (IT)
(72) Inventor: Pirovano, Camillo, I-22052 Cernusco Lombardone (Como) (IT)
(74) Representative: Faraggiana, Vittorio, Dr. Ing.

(57) **Abstract**

A conveyance member for materials having virtually fluid behaviour inside channels (10) comprises a cable (11), formed from polyester fibres, and a plurality of conveyance elements (12) radially projecting from the cable (11) and spaced along its axis and directly moulded in position on the cable (11). The external surface of the cable has a sheath of polyurethane (14) on which the conveyance elements (12) are provided in thermoplastic polyurethane to achieve a permanent constraint between the different component parts.

## Description

The present invention relates to a cable equipped with elements extending radially to its axis and designed for conveyance of materials having virtually fluid behaviour inside of tubular ducts in which runs said cable.

In the known art conveyor cables of the above type and whose conveyance elements consisting of discs or equivalent elements are provided either by moulding of plastic material directly on the cable or by means of fastening of elements provided separately are used. The cables employed are either the metallic type or the high-strength textile fibre chord type.

The metallic cables have the advantage of exhibiting high tensile strength characteristics against mechanical stresses and ensure good anchoring of the conveyance elements due virtually to the roughness of their surface structure which is generally provided with three strands wrapped around a central core.

But said cables exhibit the shortcoming of being relatively stiff which necessitates the provision of systems with a curve radius sufficiently great to avoid excessive bending stress. Another shortcoming of metallic cables is high resistance to torsion preventing the conveyance elements from positioning themselves along the duct in a manner adapted to the geometry of the curves, the position of the idling pulleys and any dissymmetry of said conveyance elements and of the material conveyed.

By comparison textile fibre cables have the advantage of obviating the above said shortcomings of poor flexibility typical of metallic cables but on the other hand exhibit less grip for the conveyance elements and, above all, have a marked tendency to ravel because of surface strand breakage due to mechanical stress and wear. This shortcoming is usually avoided by covering the cable with a protective sheath of flexible material. But in this manner anchoring ability due to friction of the conveyance elements is reduced.

There have been proposed various solutions for the problem of anchorage of the conveyance elements on sheathed cables by means of change of the cross section of the cable opposite the conveyance elements to be formed as described in EP 156.419 and EP 145.055 in the name of this applicant. Again in the name of the present applicant another proposed solution to the problem is described in EP 392.580 where the conveyance element is moulded around a nail inserted radially in the cable.

The increase in safety standards and construction costs of the systems leads however to the consideration that at present the solutions heretofore realised are not entirely satisfactory because they are either not sufficiently safe or are too elaborate and thus costly, especially with very long and complex systems with many conveyance elements.

It has now been unexpectedly found that a particular selection of the materials making up the cable, its sheath and the conveyance elements provides a product exhibiting adequate mechanical characteristics.

It should be noted that the necessary solidity of the mutual constraint of the various parts involves both gripping of the sheath on the cable body or gripping of the conveyance elements on the sheath. With this necessity is combined the requirement for high mechanical characteristics as regards both breakage and wear resistance and including therein the need for low release of particles of the material conveyed. The materials used must also be compatible with the exigencies for conveyance of materials in food processing and manufacturing industries.

These combined necessities can be solved in accordance with the present invention by providing a flexible conveyance member for materials having virtually fluid behaviour inside the channels and comprising a cable and a plurality of conveyance elements projecting radially from the cable and spaced along its axis and directly moulded in position on the cable and characterised in that the cable is made up of polyester fibres on which is hot-moulded a polyester polyurethane elastomer sheath on which are hot-moulded in the same elastomer the conveyance elements.

Another advantage achieved with the present invention is that of absolutely avoiding introduction into the cable elements which could generate fibre ravelling and cable breakage.

To clarify the explanation of the innovative principles of the present invention and its advantages compared with the known art there is described below with the aid of the annexed drawings a possible embodiment thereof by way of non-limiting example applying said principles. In the drawings:
Fig. 1 shows a partially cross-sectioned view of a conveyance member provided in accordance with the present invention in a channel,
Fig. 2 shows a partially cross-sectioned view of a detail of Fig. 1, and
Fig. 3 shows a view along plane of cut III-III of Fig. 2.

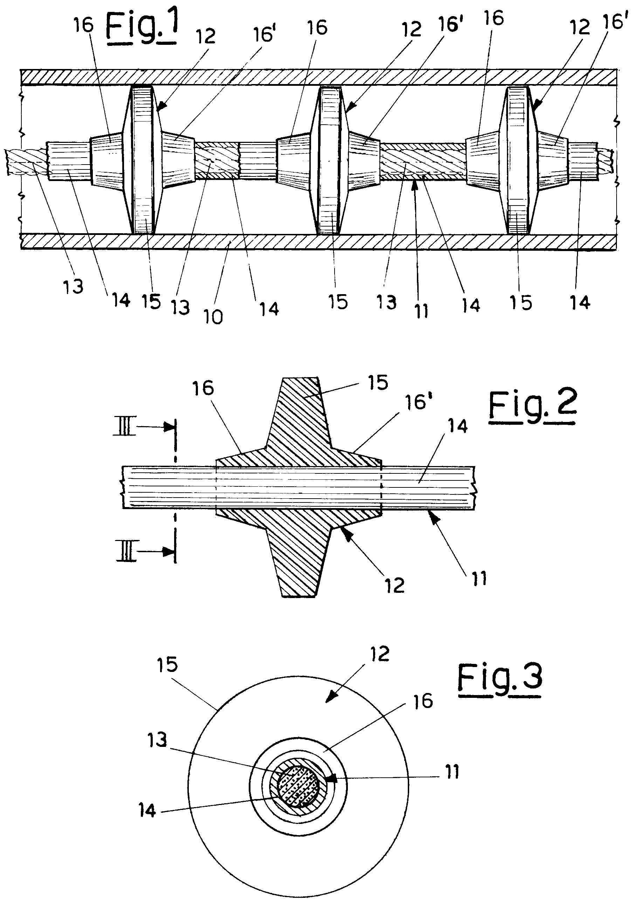

With reference to the figures Fig. 1 shows a section of channel 10 of known type within which runs axially a cable 11 bearing a plurality of conveyance elements 12 for material having virtually fluid behaviour not shown here.

As may also be seen in Fig. 3 the cable 11 consists of a core 13 provided in accordance with the known art made of high-strength textile fibre and specifically long-fibre polyester and an unbroken protective sheath 14 provided in thermoplastic polyurethane with a polyester base. That available from the BASF company, Elastogran Polyurethan-Chemie GmbH under the name "Elastollan" (registered trademark) has proven adequate for example.

Adequate mechanical characteristics both in an absolute sense and in relation to the characteristics of the cable were verified specifically for the product Elastolan S 64 D.

Each conveyance element 12 is provided, as may be seen in Fig. 2, by a disc 15 virtually normal to the axis of the cable 11 and having the purpose of physically dragging the material to be handled and two extensions 16, 16' virtually coaxial to the cable 11 and covering the cable for a certain length in opposite directions starting from the disc 15.

Said extensions 16, 16' are tapered with their thickness becoming less moving away from the disc 15 so as to have increasing flexibility and thus avoid sudden changes in the stiffness of the cable between its free sections and the sections stiffened by the presence of the disc 15 and thus eliminating individual points where fatigue breakage could occur. In this specific embodiment the extensions 16, 16' are expedient for increasing the sheath gripping surface and their tapering limits the detachment forces in case of dissymmetrical loads on the exterior of the discs.

The conveyance elements 12 are provided by directly moulding on the cable 11 in the same material (polyester-based thermoplastic polyurethane) as the sheath 14 of the cable so that at the time of moulding the molten polyurethane forming said conveyance elements 12 provides welding of the conveyance elements to the sheath covering said cable.

It is now seen how the pre-set purpose of a solid anchorage of the cable conveyance elements has been achieved and provided in a simple and economical manner.

It is shown that by using the above mentioned materials there is provided a fully satisfactory anchorage between the cable and the sheath as well as between the sheath and the conveyance elements achieving a total product exhibiting all the mechanical characteristics required of the conveyance member for resistance to tensile stress, bending and wear which occur in running within the conveyance channel.

Naturally the above description of an embodiment applying the innovative principles of the present invention is given merely by way of example and therefore is not to be taken as a limitation of the patent right claimed here.

For example, the form of the conveyance elements described herein by way of example as discs could have a different form and specifically dissymmetrical in relation to the cable axis in such a manner as to satisfy any system requirement and transverse channel configuration.

## Claims

1. Flexible member for conveyance of materials with virtually fluid behaviour inside channels (10) and comprising a cable (11) and a plurality of conveyance elements (12) projecting radially from the cable (11) and spaced along its axis and directly moulded in position on the cable (11) and characterised in that the cable (11) is formed from polyester fibres on which is hot-moulded a sheath (14) of polyester polyurethane elastomer and on which are hot-moulded in the same elastomer the conveyance elements (12).

2. Conveyance member in accordance with claim 1 characterised in that the polyester polyurethane exhibits a hardness between 60 and 70 Shore D and ultimate elongation between 400% and 300%.

3. Conveyance member in accordance with claim 1 characterised in that the polyester polyurethane is that denominated "Elastollan".

4. Conveyance member in accordance with claim 3 characterised in that the polyester polyurethane is that denominated "Elastollan S 64 D".

5. Conveyance member in accordance with claim 1 characterised in that the sheath (14) of the cable (11) is an unbroken sheath.

6. Conveyance member in accordance with claim 1 characterised in that the conveyance elements exhibit at their base extensions extending longitudinally in relation to the cable.

7. Conveyance member in accordance with claim 6 characterised in that the longitudinal extensions of the conveyance elements are tapered with their thickness becoming less starting from the centre line of said elements.

8. Conveyance member in accordance with claim 1 characterised in that the conveyance elements are in disc form.

9. Conveyance member in accordance with claim 1 characterised in that the conveyance elements are spaced in a uniform manner.

10. Procedure for the provision of a flexible conveyance member of materials having virtually fluid behaviour inside channels in accordance with claim 1 and characterised in that on a cable (11) provided with polyester fibres is formed by hot moulding a sheath (14) of polyester polyurethane elastomer on which are hot moulded in the same elastomer the conveyance elements (12).

11. Procedure in accordance with claim 10 characterised in that the polyester polyurethane is that denominated "Elastollan".

12. Procedure in accordance with claim 11 characterised in that the positive pole is that denominated "Elastollan S 64 D".
